# EUROPEAN PATENT SPECIFICATION

(11) **EP 1 675 018 B1**
(45) Date of publication and mention of the grant of the patent: **28.04.2010**
(21) Application number: 05110038.6
(22) Date of filing: 26.10.2005
(51) Int. Cl.: G06F 9/44, G06F 17/27

(54) **A method, program and system for automatic image mirroring**
Verfahren, Programm und System für automatische Bildspiegelung
Procédé, programme et système pour la réflexion automatique d'images

(30) Priority: 21.12.2004 EP 04300931
(43) Date of publication of application: 28.06.2006
(73) Proprietor: International Business Machines Corporation, Armonk, NY 10504 (US)
(72) Inventor: Santoli, Giulio, 00143, ROMA (IT); Barillari, Fabio, 96010, Priolo G. (Siracusa) (IT)
(74) Representative: Bell, Mark

(56) References cited:
- BASTIEN NOCERA: "Source code from Totem video player version 0.99.12, files totem-stock-icons.c and video-utils.c" INTERNET PUBLICATION, [Online] 6 June 2004 (2004-06-06), pages 1-7, XP002452074 Retrieved from the Internet: URL:http://ftp.gnome.org/pub/gnome/sources /totem/0.99/totem-0.99.12.tar.gz> [retrieved on 2007-09-19]
- MICROSOFT CORPORATION: "Globalization Step-by-Step: Mirroring Awareness" INTERNET PUBLICATION, [Online] January 2003 (2003-01), pages 1-11, XP002452075 Retrieved from the Internet: URL:http://www.microsoft.com/globaldev/get wr/steps/WRG_mirror.mspx> [retrieved on 2007-09-18]

## Description

### Field of the Invention

The present invention generally relates to application programs supporting bi-directional language transformation; more particularly the invention deals with graphical user interfaces supporting of bi-directional image transformation.

### Background of the Invention

Application programs supporting language translation must be able to transform a text readable from left to right in English, for instance, into a text readable from right to left in Arabic, Indy or Hebrew. Existing application program supporting bi-directional languages do it in an automatic way: the program is able to receive inputs from the user and to show output according to the direction of the language. In graphical user interfaces not only text but also layouts and images must be transformed from right-to-left to left-to-right and the opposite, from right-to-left to left-to-right. In the graphical user interface applications supporting bi-directional languages today, the text and layout are displayed automatically in the desired direction on the basis of a unique resource bundle containing translated text. A Resource Bundle is the portion of a piece of software that holds application data (but not user data) separate from the program itself. Typical resources include icons, window positions, dialog box definitions, program text, and menus. The application makes a transformation on the text and layout elements from this bundle according to the language used. However, the methods of prior art to internationalize GUI do not provide an automatic solution for images today. The usual solution today is for instance described in Chapter 9 'Internationalized Graphical User Interfaces' of the book of Andy Deitsch and David Czarnecki, 'Java Internationalization', edited in March 2001 by O'Reilly. The solution consists in providing different images in the Resource Bundle, one for each locale supported by the application. A locale is a set of user preference information related to the user's language, environment and/or cultural conventions. Furthermore, the code of the application must include a logic to load the right image according to the language used. The drawback of this non automatic solution is doubling of program storage and library for image space and higher code complexity.

The difficulty with the image mirroring is the fact that depending on the meaning of the image, it will be mirrored or not. For instance, the image of a joystick to be reversed if the direction of the language changes but a road label with 'STOP' inside has no need to be mirrored. A solution is proposed in the 'Mirroring Awarness' document posted as web pages on January 2003 on the Microsoft (Microsoft is a trademark of Microsoft Corporation in certain countries) web site at the address:
Http://www.microsoft.com/globaldev/getwr/steps/WRG_mirror.mspx

The method proposed for a developer of a pure Windows Application is to the automatic mirroring of the application. Every graphical object will be mirrored, images and icons included. In this case the problem is that some images, as already known, have not to be mirrored depending of their meaning. Microsoft suggests adding extralogic within the code to disable the automatic mirroring temporarily in those cases. This is performed by calling some specific disabling mirroring Windows (Windows is a trademark of Microsoft Corporation in certain countries) instructions. Conversely, the developer can disable or not enable the automatic mirroring. In this case no image will be mirrored and some instructions in the code are needed to enable the mirroring. In Web applications, the document of Microsoft suggests set a flag equal to RTL (Right To Left). Nevertheless in this case, the images will not be mirrored automatically, the developer has to apply the transformation explicitly by calling a Cascading Style Sheet filters (script language like) that will transform the image. This mirroring solution is not automatic as the application code or Web pages have to be modified to introduce a logic for enabling or not mirroring.

Consequently, there is a need for a mirroring of images in application program which does not requiring a logic in the application code itself to enable or disable it.

### Summary of the Invention

It is therefore an object of the present invention to provide a method for automatic internationalizing of applications with a resource bundle comprising a unique resource per image elements.

The object is reached, according to claim 1 with a method for transforming an image in a computer application supporting internationalization and images, comprising the steps of:
in an editor application (105, 220), creating (440) a file (200) comprising image data and additional information specifying areas of the image which might need to be mirrored depending on the locale of the application in which the image is to be used;
reading (500) the file from a GUI application (110, 210);
the GUI application selectively performing mirroring on said areas of the image contained in the file depending on the locale of the GUI application (510) and the additional information (520) contained in the file.

The object is also reached, according to Claim 2 with the method of Claim 1, further comprising in the step of creating a file, a step of reading at least one type of transformation entered by the user (300) for defining the additional information.

The object is also reached, according to Claim 3 with the method of Claim 1 or 2 further comprising in the step of creating a file, a step of reading an image data in a GIF, TIFF or JPG graphical format

The object is also reached, according to Claim 4, with the method or anyone of Claims 1 to 3 wherein the type of transformation is right-to-left or left-to-right or up-to-down or down-to-up.

The object is also reached, according to Claim 5, with the method of anyone of Claims 1 to 4 further comprising in the step or creating a file, a step of adding other additional information to be used by the GUI to perform one function different from mirroring and in relation with the meaning of tha other information.

The object is also reached, according to Claim 6, with the method of Claim 5 wherein the step of adding other additional information to be used by the GUI comprises adding a parental authorization for displaying of the image.

The object is also reached, according to Claim 7, with the method of anyone of Claims 1 to 6 whereln the step of selectively performing mirroring depending on the locale of the GUI application comprises a step of reading the locale of the operating system of the computer.

The object is also reached, according to Claim 8, with the method of anyone of Claims 1 to 6 wherein the step of selectively performing mirroring depending on the locale of the GUI application comprises a step of reading a locale information entered by the user.

The object is also reached, according to Claim 9, with a computer program product comprising programming code instructions for executing the steps of the method according to anyone of claims 1 to 8 when said program is executed on a computer.

The object is also reached, according to Claim 10, with a system comprising means adapted for carrying out the method according to anyone of claims 1 to 8.

The application software will use the metadata to adapt automatically the images to be displayed by the Operating System according to the language used (Operating System Locale).

The metadata of the present solution is a wrapper of any existing image format (TIFF, GIF, JPG, etc ...) understandable by the GUI.

There is no modification of code needed to insert instruction for enabling or disabling mirroring because the meaning of the image is included in the new image format of the invention.

One advantage of the method of the invention is that it further allows to transform only a portion of an image.

This solution can be introduced in any GUI accelerating the code development. It applies to any programming language environment.

This solution may become a standard in XML if supported by the desktop managers in the operating systems.

This solution is a great simplification for implementing in Web site applications support for many languages.

More information can be added to the metadata in order to include, for instance more options than the bi-directional information and for other purpose. Fore instance, a parental control can be added; the program can check the user and decide not to display the image.

Another advantage of the method of the invention is to make the application logic independent from the images. Indeed the application logic do not have to be modified whenever the image must be substituted or modified (i.e. a mirrorable image is substituted with a non-mirrorable one).

More information can be added to the metadata in order to include, for instance more options than the bi-directional information and for other purpose. Fore instance, a parental control can be added; the program can check the user and decide not to display the image.

Another advantage of the method of the invention is to make the application logic independent from the images. Indeed the application logic do not have to be modified whenever the image must be substituted or modified (i.e. a mirrorable image is substituted with a non-mirrorable one).

### Brief Description of the Drawings

FIG. 1 illustrates the components of the computing environment for executing the method of the prior art for image mirroring;
FIG. 2 illustrates the components of the computing environment for image mirroring according to the preferred embodiment;
Fig. 3 is a logical representation of the new Image Processor according to the preferred embodiment;
Fig. 4 shows the flow chart of the creation an image having a new format according to the method of the preferred embodiment.
Fig. 5 shows the flow chart of the use by the GUI of the image created with a new format to return a transformed image according to the method of the preferred embodiment.

### Detailed Description of the preferred embodiment

The method of the preferred embodiment is implemented in XML programming language. Any other programming language can be extended to support the new image format according to the invention.

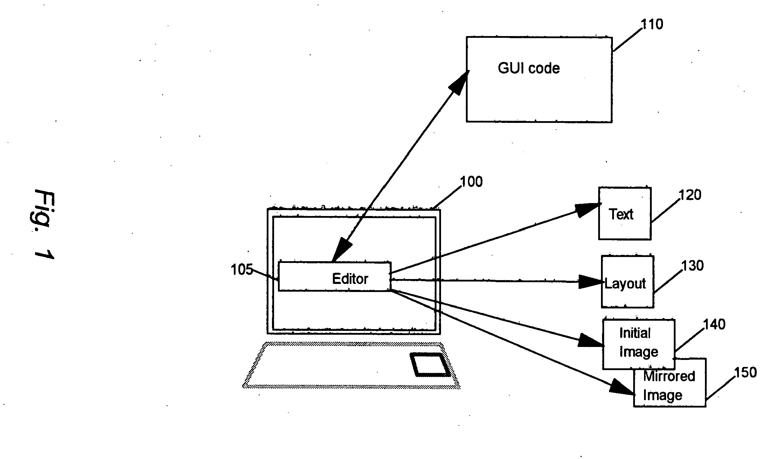

FIG. 1 illustrates the components of the computing environment for executing the method of the prior art for image mirroring. In the solutions of the prior art the developer uses an editor (105) on his workstation (100) to create the GUI code, the initial text and layout elements. For text and layout, at execution of the GUI, the GUI reads the locale of the language to be used in the system, transforms into a different direction the text and layout elements by changing the direction according to the locale of the operating system on which it is operating, and displays the text and layout elements read from the bundles (120, 130). For images, with the solution of the first prior art, the developer creates with the editor a mirrored image (150) which is included in the image bundle. In the second solution of the prior art, there is no need to create a mirrored image as the GUI use a system service to generate a mirrored image if necessary. However, in both solutions of the prior art, the developer adds instructions in the GUI code through the editor (105) to introduce, each time an image is to be displayed, a logic for deciding or not, depending on the meaning of the image, if the initial image or a mirrored image will be used.

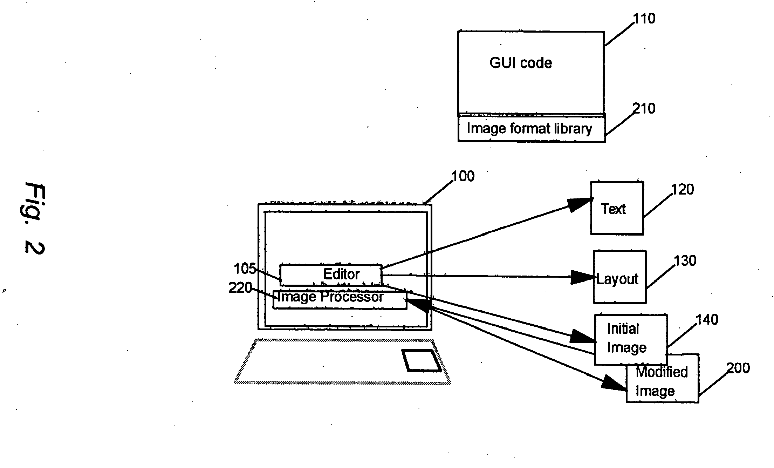

FIG. 2 illustrates the components of the computing environment for image mirroring according to the preferred embodiment. The GUI developer proceeds in the same way for text and layout mirroring. The initial image elements (140) are created in the same way through the editor (105). The developer modifies the initial image element into modified image having a new image format (200) by using a new image processor (220). The new image format is directly usable by the GUI which display the image with the new format according to the locale of the system on which it is operating. The GUI code is not modified by the developer. At execution of the GUI, before displaying the images, according to the locale of the system on which the GUI operates, the GUI uses a new library (210) enabling it to read the modified images (200) and to perform the transformation.

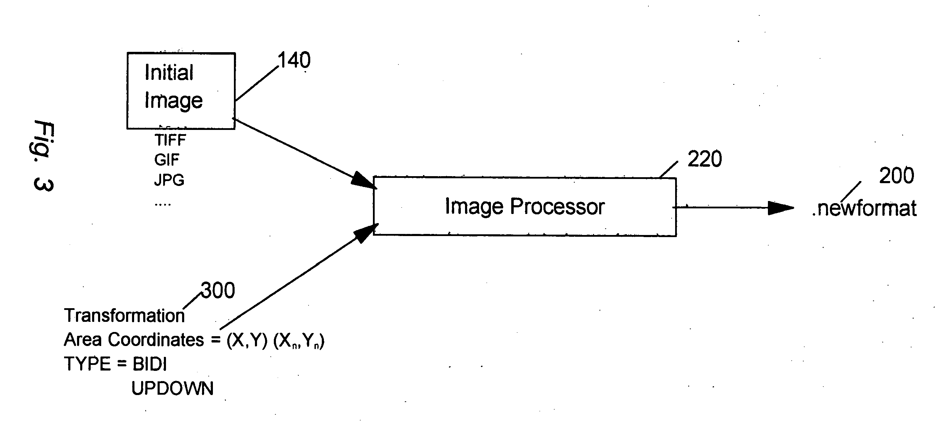

Fig. 3 is a logical representation of the new Image Processor according to the preferred embodiment. The input to this new tool is an initial image (140) described in a TIFF, GIF, JPG or any other graphical format. The image processor interprets the user input settings and generates a new file contains the original image plus the transformation declarations for the whole image or parts of the image. An example of a command for a transformation of an image is given (300) in Fig. 3. The command specifies if an image is to be transformed and how. In the preferred embodiment more than one choice is proposed: the type of transformation is entered in the command field with `TYPE' parameter which can be either `BIDI' for bi-directional this means the image (left-to right into right-to left) or 'UPDOWN' this means the image has to be reversed up-to down into down-to-up. Also, in the preferred embodiment, it may be indicated that the transformation applies only to some parts of the image defined by their coordinates. This is the object of the 'Area Coordinates' parameter which designates the coordinates of the image parts on the screen: (X,Y) etc...

The output of the processor is an extended graphical format ('.newformat'), the new image format (200) which is a wrapper of the format of the initial image read in input. A set of metadata information is added to the initial format, which comprises, in the preferred embodiment, the bidirectional enablement and the data format type. It is XML based, with a minimum set of tags (is bidi, bidi sub area, data type). The following is an example for '.newformat' data format. 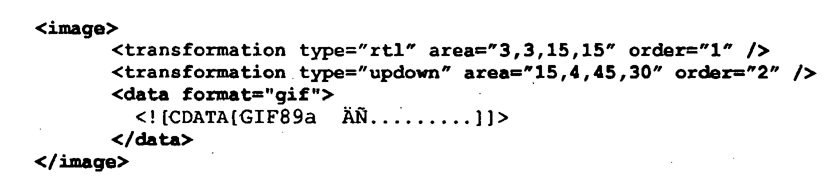 In bold is the wrapping of the image data which is the only part not in bold.
In the above xml example *transformation type* indicates the type of the transformation (*ltr* for left to rigth, *rtl* for right to left, *updown* for up to down, *downup* for down to up), *transformation area* indicates the coordinates of the area where to apply the transformation, *transformation order* indicates the transformation ordering and *data format* indicates the image format.

The image processor (220) reads the image in input, the command for the image in the new format and generates the '.newformat' format. A person skilled in the art can write the program of this image processor in any programming language.

Any application such as a GUI supporting internationalization can read the '.newformat' format and apply the mirroring when the locale requires an orientation different from the original image orientation. In the above example the image will not be mirrored if the application is running in a left-to-right operating environment and the area (3,3,15,15) of the image will be mirrored if the application is running in a right-to-left Operating Environment.

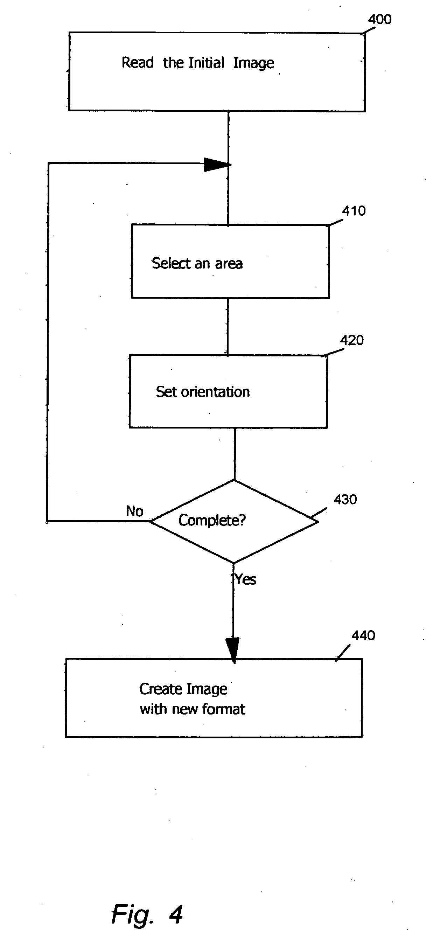

Fig. 4 shows the flow chart of the creation of an image having a new format according to the method of the preferred embodiment. This flow chart is implemented in the new image processor program (220) for wrapping an existing graphical image format (140) understandable by the GUI and creating a new format (200) of the image which will be understandable by the GUI enriched with a new image format library (210) according to the method of the preferred embodiment. The new format of the image will contain information describing how the user wants the image to be mirrored.

The processor program gets (400) through a user interface as input the initial image. In the preferred embodiment the user interface of the Image processor is graphical so, the image is displayed. In a simpler embodiment of the invention, the image processor only accepts command line and only the name of the image is got by the processor program. In the following step the user specifies which area of the image is to be mirrored (410). If a graphical user interface is used, the area is defined graphically on the screen, else the names of the areas are specified. Then, the user specifies (420) which kind of transformation is required for the image or image areas coded as LTR (left-to-right), RTL (right-to-left), UD (Up-to Down) or DU (Down-to-Up). The split of the image into areas is an option of the method of the preferred embodiment, the default being getting mirroring information for the entire image if no area is specified. The user repeats the specifying step (420) if all the areas are not processed (answer No to test 430), when the transformation is specified for the entire image (answer No to test 430), the new format '.newformat' is created which contains the initial image data and the parameter values describing the information to mirror the image if needed during the execution of the GUI.

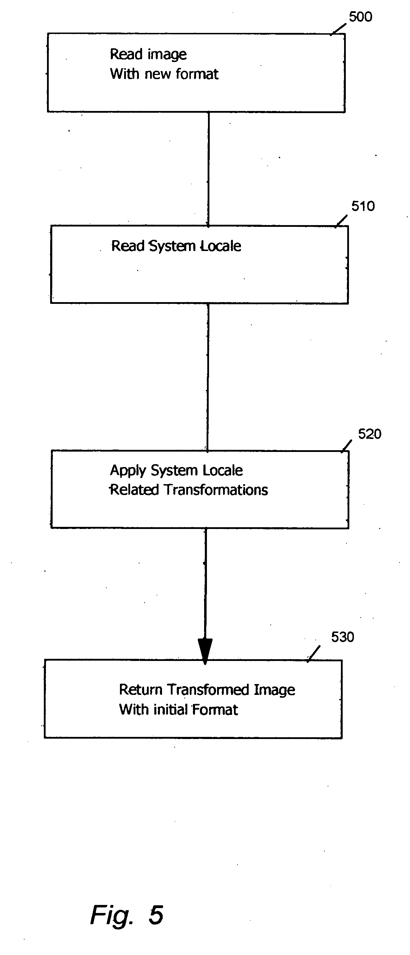

Fig. 5 shows the flow chart of the use by the GUI of the image created with a new format to return a transformed image according to the method of the preferred embodiment. The GUI reads (500) the new image format ('.newformat' file) by calling the image format library (210). The local information are read (510). As with the other GUI applications, the Locale information are provided in the operating system of the workstation on which the GUI operates. One other possibility for the user to enter locale information which overrides Locale of the operating system. The GUI as usual GUI applications calls its 'transformation function' to read the locale and further perform the transformations required. For Layout transformation and Text transformation the GUI of prior art use different libraries, for image mirroring the transformation function uses the new Image format library (210). In the next step the transformation function of the GUI uses the inputs to apply (520) the transformation as required by the Locale information read in the preceding step. If the Locale information specifies right-to-left language, the transformation function will apply the left-to-right transformation to all the transformation areas declared as `RTL' in the image input. The transformation function of the GUI computes the new image data in the initial format (GIF, JPG....) which includes the mirroring of the concerned areas.
The new image data is returned to the GUI by the transformation function.

## Claims

1. A method for transforming an image in a computer application supporting internationalization and images, comprising the steps of:
in an editor application (105, 220), creating (440) a file (200) comprising image data and additional information specifying areas of the image which might need to be mirrored depending on the locale of the application in which the image is to be used;
reading (500) the file from a GUI application (110, 210);
the GUI application selectively performing mirroring on said areas of the image contained in the file depending on the locale of the GUI application (510) and the additional information (520) contained in the file.

2. The method of Claim 1, further comprising in the step of creating a file, a step of reading at least one type of transformation entered by the user (300) for defining the additional information.

3. The method of Claim 1 or 2 further comprising in the step of creating a file, a step of reading an image data in a GIF, TIFF or JPG graphical format.

4. The method of anyone of Claims 1 to 3 wherein the type of transformation is right-to-left or left-to-right or up-to-down or down-to-up.

5. The method of anyone of Claims 1 to 4 further comprising in the step of creating a file, a step of adding other additional information to be used by the GUI to perform one function different from mirroring and in relation with the meaning of that other information.

6. The method of Claim 5 wherein the step of adding other additional information to be used by the GUI comprises adding a parental authorization for displaying of the image.

7. The method of anyone of Claims 1 to 6 wherein the step of selectively performing mirroring depending on the locale of the GUI application comprises a step of reading the locale of the operating system of the computer.

8. The method of anyone of Claims 1 to 6 wherein the step of selectively performing mirroring depending on the locale of the GUI application comprises a step of reading a locale information entered by the user.

9. A computer program product comprising programming code instructions for executing the steps of the method according to anyone of claims 1 to 8 when said program is executed on a computer.

10. A system comprising means adapted for carrying out the method according to anyone of claims 1 to 8.

## Patentansprüche

1. Verfahren für das Umwandeln eines Bildes in einer Computeranwendung, die Internationalisierung und Bilder unterstützt, wobei das Verfahren folgende Schritte umfasst:
Erzeugen (440) einer Datei (200), die Bilddaten und zusätzliche Informationen umfasst, welche Bereiche des Bilds angeben, die je nach Gebietsschema der Anwendung, in der das Bild verwendet werden soll, unter Umständen gespiegelt werden müssen, in einer Editoranwendung (105, 220);
Lesen (500) der Datei aus einer GUI-Anwendung (110, 210);
selektives Ausführen einer Spiegelung für diejenigen Bereiche des Bilds, die in der Datei enthalten sind, durch die GUI-Anwendung, abhängig von dem Gebietsschema der GUI-Anwendung (510) und den in der Datei enthaltenen zusätzlichen Informationen (520).

2. Verfahren nach Anspruch 1, das ferner in dem Schritt des Erzeugens einer Datei einen Schritt des Lesens von mindestens einer Art von Umwandlung umfasst, die von dem Benutzer (300) eingegeben wird, um die zusätzlichen Informationen zu definieren.

3. Verfahren nach Anspruch 1 oder 2, das weiterhin in dem Schritt des Erzeugens einer Datei einen Schritt des Lesens von Bilddaten in einem GIF-, TIFF- oder JPG-Grafikformat umfasst.

4. Verfahren nach einem beliebigen der Ansprüche 1 bis 3, wobei die Umwandlung je nach ihrer Art von rechts nach links oder von links nach rechts oder von oben nach unten oder von unten nach oben erfolgt.

5. Verfahren nach einem beliebigen der Ansprüche 1 bis 4, das ferner in dem Schritt des Erzeugens einer Datei einen Schritt des Hinzufügens anderer zusätzlicher Informationen umfasst, die von der GUI-Anwendung verwendet werden sollen, um eine Funktion auszuführen, die sich von der Spiegelung unterscheidet und die in Zusammenhang mit der Bedeutung der anderen Informationen steht.

6. Verfahren nach Anspruch 5, wobei der Schritt des Hinzufügens anderer zusätzlicher Informationen, die von der GUI-Anwendung verwendet werden sollen, das Hinzufügen einer elterlichen Erlaubnis für das Anzeigen des Bilds umfasst.

7. Verfahren nach einem beliebigen der Ansprüche 1 bis 6, wobei der Schritt des selektiven Ausführens der Spiegelung je nach dem Gebietsschema der GUI-Anwendung einen Schritt des Lesens des Gebietsschemas des Computerbetriebssystems umfasst.

8. Verfahren nach einem beliebigen der Ansprüche 1 bis 6, wobei der Schritt des selektiven Ausführens der Spiegelung je nach dem Gebietsschema der GUI-Anwendung einen Schritt des Lesens einer Gebietsschemainformation umfasst, die von dem Benutzer eingegeben wird.

9. Computerprogrammprodukt, das Programmiercodebefehle für das Ausführen der Schritte des Verfahrens nach einem beliebigen der Ansprüche 1 bis 8 umfasst, wenn das Programm auf einem Computer ausgeführt wird.

10. System, das ein Mittel umfasst, welches so gestaltet ist, dass es das Verfahren nach einem beliebigen der Ansprüche 1 bis 8 ausführt.

## Revendications

1. Procédé de transformation d'une image dans une application informatique prenant en charge l'internationalisation et des images, comprenant les étapes consistant à :
dans une application d'édition (105, 220), créer (440) un fichier (200) comprenant des données d'image et des informations supplémentaires spécifiant des zones de l'image qui peuvent devoir faire l'objet d'une réflexion en fonction de la localisation de l'application dans laquelle l'image doit être utilisée,
lire (500) le fichier à partir d'une application d'interface GUI (110, 210),
l'application d'interface GUI effectuant sélectivement une réflexion sur lesdites zones de l'image contenue dans le fichier en fonction de la localisation de l'application d'interface GUI (510) et des informations supplémentaires (520) contenues dans le fichier.

2. Procédé selon la revendication 1, comprenant en outre dans l'étape consistant à créer un fichier, une étape consistant à lire au moins un type d'informations entrées par l'utilisateur (300) pour définir les informations supplémentaires.

3. Procédé selon la revendication 1 ou 2, comprenant en outre dans l'étape consistant à créer un fichier, une étape consistant à lire des données d'image dans un format graphique GIF, TIFF ou JPG.

4. Procédé selon l'une quelconque des revendications 1 à 3, dans lequel le type de transformation est de la droite vers la gauche ou de la gauche vers la droite ou du haut vers le bas ou du bas vers le haut.

5. Procédé selon l'une quelconque des revendications 1 à 4, comprenant en outre dans l'étape consistant à créer un fichier, une étape consistant à ajouter d'autres informations supplémentaires devant être utilisées par l'interface GUI pour effectuer une fonction différente de la réflexion et liée à la signification de ces autres informations.

6. Procédé selon la revendication 5, dans lequel l'étape consistant à ajouter d'autres informations supplémentaires devant être utilisées par l'interface GUI comprend l'ajout d'une autorisation parentale pour afficher l'image.

7. Procédé selon l'une quelconque des revendications 1 à 6, dans lequel l'étape consistant à effectuer sélectivement la réflexion en fonction de la localisation de l'application d'interface GUI comprend une étape consistant à lire la localisation du système d'exploitation de l'ordinateur.

8. Procédé selon l'une quelconque des revendications 1 à 6, dans lequel l'étape consistant à effectuer sélectivement la réflexion en fonction de la localisation de l'application d'interface GUI comprend une étape consistant à lire des informations de localisation entrées par l'utilisateur.

9. Produit de programme informatique comprenant des instructions de code de programmation destinées à exécuter les étapes du procédé selon l'une quelconque des revendications 1 à 8 lorsque ledit programme est exécuté sur un ordinateur.

10. Système comprenant un moyen conçu pour exécuter le procédé selon l'une quelconque des revendications 1 à 8.
